# EUROPÄISCHE PATENTANMELDUNG

(11) **EP 0 738 458 A2**
(43) Veröffentlichungstag der Anmeldung: **23.10.1996**
(21) Anmeldenummer: 96105608.2
(22) Anmeldetag: 10.04.1996
(51) Int. Cl.: A01B 63/00

(54) **Landwirtschaftliches Gerät mit einer Vorrichtung zum Einstellen des Bodendrucks der Werkzeuge**

(30) Priorität: 17.04.1995 US 422925
(71) Anmelder: DEERE & COMPANY, Moline Illinois 61265-8098 (US)
(72) Erfinder: Lowe, Terry Lee, Ankeny, Iowa 50021 (US); Noonan, James Thomas, Johnston, Iowa 50131 (US)
(74) Vertreter: Feldmann, Bernhard

(57) **Zusammenfassung**

Bei einem landwirtschaftlichen Gerät mit einem Rahmenteil (12), einem an den Rahmenteil (12) vertikal verstellbar angeschlossenen Werkzeugträger und mit einer Vorrichtung zum Einstellen des Bodendrucks des oder der an dem Werkzeugträger vorgesehenen Werkzeuge (60, 62, 64) über mindestens eine Feder (222,224) weist der Werkzeugträger einen Abschnitt (212, 214) mit untereinanderliegenden Rasterstellen auf, wobei die Feder (222, 224) an einem ihrer Enden mit einem Eingreifteil (250) versehen ist, der manuell und wahlweise in eine der Rasterstellen einsetzbar ist, um unterschiedliche Federspannungen bzw. Bodendrücke zu erhalten.

## Beschreibung

Die Erfindung bezieht sich auf ein landwirtschaftliches Gerät mit einem Rahmenteil, einen an den Rahmenteil vertikal verstellbar angeschlossenen Werkzeugträger und mit einer Vorrichtung zum Einstellen des Bodendrucks des oder der an dem Werkzeugträger vorgesehenen Werkzeuge über mindestens eine Feder.

Bei Sämaschinen, insbesondere Einzelkornsämaschinen, aber auch bei Bodenbearbeitungsgeräten, wie Grubbern, werden die Werkzeuge im Boden in einer vorgegebenen Arbeitstiefe geführt, wobei der Bodendruck je nach der Bodenart variierbar ist. In der Regel erfolgt die Einstellung des Bodendrucks über Federn.

Bei einem bekannten landwirtschaftlichen Gerät für die Pflanzenpflege (US-A-4 461 355) ist der Werkzeugträger für eine Reiheneinheit über einen oberen Lenker und zwei untere Lenker an einem querverlaufenden Rahmenteil angelenkt. Der obere Lenker ist mit einem Längsschlitz versehen, in dem ein Querbolzen verschiebbar ist. An den beiden äußeren Enden des Querbolzens greift jeweils eine Feder mit ihrem einen Ende an. Das andere Ende der Feder ist an je einem unteren Lenker angeschlossen. Durch Verschieben des Querbolzens in dem Längsschlitz kann nun die Federspannung geändert werden. Das Verschieben des Querbolzens erfolgt durch eine Ladeschraube, deren Schraubenkopf außen an der rückwärtigen Stirnseite des oberen Lenkers vorgesehen ist und deren Gewindeteil eine Gewindebohrung im Querbolzen durchsetzt. Durch Drehen des Schraubenkopfes mit einem entsprechenden Schlüssel werden die Federenden an dem Querbolzen linear verschoben und die Federspannung wird verändert. Diese Einstellvorrichtung ist in ihrem Aufbau aufwendig, kann nur mit einem Werkzeug verstellt werden, ist den Staubbedingungen ständig ausgesetzt, muß deshalb relativ oft gewartet werden und ist ungünstig plaziert. Ein Wiederauffinden einer einmal eingestellten Stellung ist schwierig. Sind mehrere Einstellvorrichtungen vorhanden, beispielsweise bei mehreren Reiheneinheiten, so ist es kaum möglich, die Einstellungen derart vorzunehmen, daß an allen Reiheneinheiten dieselbe Federspannung erzielt wird.

Entsprechende Nachteile sind auch bei dem bekannten landwirtschaftlichen Gerät zu finden, von dem die Erfindung ausgeht (US-A-4 766 962). Dieses weist eine Einstellvorrichtung für einen Furchenzieher mit Zahnstangen und umlaufenden Zahnrädern auf. Die Zahnstangen sind an Platten vorgesehen, die mit zwei oberen Lenkern verschraubt sind. Die Zahnräder sind an einer Stange angebracht, an der zwei Federn mit ihrem einen Ende angreifen. Das andere Ende der Federn ist an einer mit dem Rahmenteil verbundenen Platte angeschlossen. Die Zahnräder müssen außerdem noch durch eine Sperrvorrichtung in ihrer jeweiligen Stellung festgesetzt werden.

Die mit der Erfindung zu lösende Aufgabe wird darin gesehen, bei einem landwirtschaftlichen Gerät, die Vorrichtung zur Einstellung des Bodendrucks der Werkzeuge so auszubilden, daß zumindest einige der vorgenannten Probleme gelöst sind. Die Erfindung sieht deshalb vor, daß der Werkzeugträger einen Abschnitt mit untereinanderliegenden Rasterstellen aufweist und daß die Feder an einem ihrer Enden mit einem Eingreifteil versehen ist, der wahlweise in eine der Rasterstellen einsetzbar ist. Damit kann die Federspannung in einfacher Weise dadurch geändert werden, daß der Eingreifteil in eine andere Rasterstelle eingesetzt wird. Auf komplizierte Lastschrauben oder Zahnstangenführungen kann damit verzichtet werden. Die Verstellung kann außerdem von Hand erfolgen, so daß Hilfswerkzeuge, wie Schraubenschlüssel, nicht erforderlich sind. Die Rasterstellen erlauben ein leichtes Wiederauffinden einer einmal eingestellten Stellung. Bei mehreren Einstellvorrichtungen kann an jeder Vorrichtung eine identische Einstellung erfolgen.

Das Einsetzen des Eingreifteils von Hand kann dadurch erfolgen, daß die Bedienungsperson den Eingreifteil abzieht und in eine neue Rasterstelle wiedereinsetzt. Dies kann kraftaufwendig sein. Nach einem weiteren erfindungsgemäßen Vorschlag ist es kraftsparender, wenn der Eingreifteil Bestandteil eines Stellmechanismus ist, der auf dem Abschnitt mit den Rasterstellen abrollbar ist.

Im einzelnen kann nach der Erfindung vorgesehen werden, daß der Werkzeugträger aus einem sich in Arbeitsrichtung erstreckenden Träger besteht, der wenigstens eine vertikal gerichtete Platte aufweist, die an ihrer rückwärtigen Stirnkante mit den Rasterstellen versehen ist und in ihrem frontseitigen Bereich über zwei vertikal verschwenkbare und zueinander parallel verlaufende Lenker an dem Rahmenteil angelenkt ist, an dem auch die Feder mit ihrem dem Eingreifteil abgelegenen Ende angreift.

Es wird weiter vorgeschlagen, daß die Abschnitte mit den Rasterstellen Zähne mit rechtwinkligen Zahnflanken aufweisen. Damit sind die Zahnflanken geradlinig und die Zahnspitze hat einen Winkel von 90°.

Der Eingreifteil kann nach der Erfindung quadratisch ausgebildet sein, d. h. vier Seitenkanten von gleicher Länge aufweisen, was die Rollbewegung vereinfacht. Seine Breite kann dabei der Plattenstärke entsprechen.

Wenn ferner die Seiten der Rasterstellen rechtwinklig zueinander oder treppenförmig angeordnet sind, wobei die oberste und die unterste Seite zumindest der Länge einer Seite des Eingreifteils entspricht und die übrigen Seiten kürzer sind, ergibt sich der weitere Vorteil, daß ein Herausrollen des Eingreifteils aus der obersten und der untersten Rasterstelle vermieden ist. Die im übrigen kürzeren Seitenlängen verbessern das Abrollen des Eingreifteils.

Nach der Erfindung wird es bevorzugt, daß zwei zueinander einen Querabstand aufweisende Abschnitte vorgesehen sind, und daß der Stellmechanismus sich zwischen diesen Abschnitten erstreckt und das Ende der Feder drehbar aufnimmt. Die Feder wird dadurch die Eingreifteile immer in die zugehörigen Rasterstellen ziehen und dort halten. Die drehbare Aufnahme der Feder ermöglicht stets ihre richtige Ausrichtung.

Schließlich kann erfindungsgemäß noch vorgesehen sein, daß der Werkzeugträger mit zwei zueinander einen Querabstand aufweisenden Platten versehen ist, wobei an den rückwärtigen vertikal gerichteten Stirnseiten dieser Platten die Abschnitte mit den Rasterstellen vorgesehen sind, die rückwärtigen Enden der Lenker in dem vorderen Bereich der Platten und zwischen den Platten gelagert sind, je eine Feder außen neben den Platten an dem Stellmechanismus angreift, die Lenker übereinander angeordnet sind und wobei sich die Abschnitte mit den Rasterstellen zwischen den Lenkern befinden. Hierdurch entsteht eine kompakte und einfache Bauweise und Vorkehrungen zum Anschließen der oberen Federenden an den oberen Lenkern sind nicht erforderlich.

Ein leichtes Abrollen mit einem Handgriff ist gegeben, wenn der Stellmechanismus ferner aus einer an mindestens einem Ende abgewinkelten Stange besteht, auf der die Eingreifteile in einem Abstand angeordnet sind, der dem Plattenabstand entspricht, wobei außen neben den Platten auf der Stange je eine Führungsscheibe vorgesehen ist.

In der Zeichnung ist ein nachfolgend näher erläutertes Ausführungsbeispiel der Erfindung dargestellt. Es zeigt:
- Fig. 1: eine an einen Querrahmen eines Grubbers angeschlossene Reiheneinheit mit mehreren Bodenbearbeitungswerkzeugen und einer Vorrichtung zur Einstellung des Bodendrucks in Seitenansicht und
- Fig. 2: den Werkzeugträger der Reiheneinheit nach Fig. 1 in perspektivischer Ansicht von rückwärts.

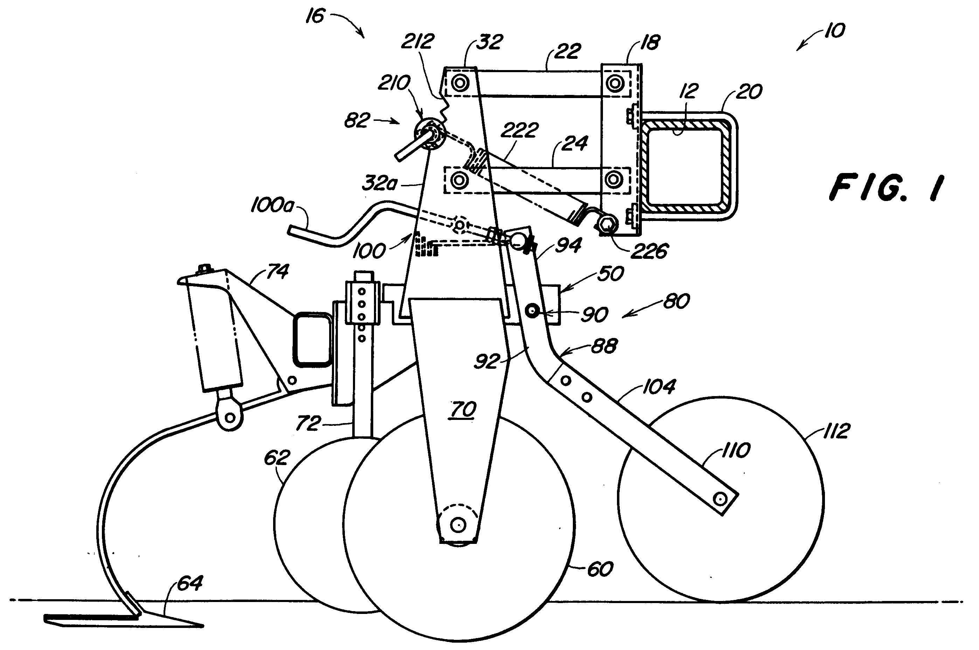

In Fig. 1 der Zeichnung ist ein landwirtschaftliches Gerät 10, wie beispielsweise ein Bodenbearbeitungsgerät in Form eines Grubbers, auszugsweise dargestellt. Man erkennt einen im Schnitt dargestellten Rahmen oder einen Werkzeugträger 12, der sich im Einsatz quer zur Arbeitsrichtung erstreckt und an eine nicht dargestellte vertikal verstellbare Gerätedreipunktkupplung eines Ackerschleppers anschließbar ist. An den Werkzeugträger 12 sind eine Vielzahl von Reiheneinheiten 16 mit gegenseitigem Querabstand anschließbar. Die Reiheneinheiten können je nach der Geräteart mit Austragvorrichtungen für Saatgut und/oder Dünger oder mit Bodenbearbeitungswerkzeugen versehen sein. In jedem Fall kann die Eindringtiefe in den Boden gesteuert werden. Jede Reiheneinheit 16 ist über hochstehende Flanschteile 18 und zugehörige Bügelschrauben 20 an den Werkzeugträger 12 anschließbar. Die Flanschteile 18 sind mit nach rückwärts weisenden Schenkeln versehen, an die bei dem bevorzugten Ausführungsbeispiel zwei übereinanderliegende Lenker 22 und 24 oder Hohlprofilträger mit rechteckigem Querschnitt vertikal verschwenkbar angeschlossen sind. Die rückwärtigen Enden dieser Lenker 22 und 24 sind an den Innenseiten von zwei hochstehenden und Querabstand aufweisenden Platten 32 und 34 mittels Gelenkverbindungen 36 und 38 vertikal verstellbar angeschlossen. Die Platten nehmen an ihren unteren Enden die entsprechenden Werkzeuge auf. Im vorliegenden Fall haben die Platten im Bereich ihres oberen Endes einen Querabstand, der der Breite der Lenker 22 und 24 entspricht. In ihrem unteren Bereich sind die Platten nach innen abgewinkelt bzw. abgesetzt und laufen in hochstehende Endteile 42 und 42 aus. Der Querabstand dieser Endteile ist kleiner als der Querabstand der Platten in ihrem oberen Bereich, und die Endteile 42 und 44 sind mit Befestigungslöchern für den Anschluß eines sich in Arbeitsrichtung erstreckenden Hohlträgers 50 mit quadratischem Querschnitt versehen. Die nach rückwärts zeigenden Stirnkanten der Platten 32 und 34 sind mit 32a und 34a bezeichnet.

Der Hohlträger 50 dient der Werkzeugaufnahme und ist etwa in waagerechter Ausrichtung mit den Endteilen 42 und 44 der Platten 32, 34 über Schrauben 52 und 54 verbunden. Bei dem bevorzugten Ausführungsbeispiel können an den Hohlträger 50 eine Vielzahl von Bodenbearbeitungswerkzeugen, wie sie bei 60, 62 und 64 angedeutet sind, über Werkzeughalter 70, 72 und 74 angeschlossen werden. Im Falle von Bodenbearbeitungsgeräten arbeiten die Werkzeuge einer Reiheneinheit zwischen jeweils zwei benachbarten Pflanzenreihen. Da zudem der Hohlträger 50 über die Endteile 42 und 44 der Platten 32 und 34 auch vorne und hinten beliebig viel überstehen kann, ist genügend Platz für zahlreiche Werkzeugkombinationen und Gruppierungen geschaffen.

Am vorderen Ende des Hohlträgers 50 ist noch eine Tiefensteuerung 80 vorgesehen, über die die Arbeitstiefe der Bodenbearbeitungswerkzeuge 60 bis 64 gesteuert werden kann. Je nach den Bodenverhältnissen muß aber auch auf die Bodenbearbeitungswerkzeuge ein nach unten gerichteter und einstellbarer Druck wirken, was über eine Federspannvorrichtung 82 erfolgen kann. Diese ist zwischen den Flanschteilen 18 und den rückwärtigen Stirnseiten 32a und 43a der Platten 32 und 34 vorgesehen.

Die Tiefensteuerung, die in der europäischen Patentanmeldung mit der Bezeichnung "Landwirtschaftliches Gerät mit einer Tiefensteuerung", die aus der Patentanmeldung aus den VStvA mit dem Aktenzeichen 08/423,620 vom 17.04.1995 die Priorität in Anspruch nimmt, im einzelnen beschrieben ist, weist einen Steuerarm 88 auf, der über eine Gelenkverbindung 90 an den Hohlträger 50 vertikal schwenkbar angeschlossen ist. Der Steuerarm 88 weist hierzu einen gegabelten oberen Abschnitt 92 auf. An das obere Ende 94 des Steuerarmes 88 greift zur Verstellung der Tiefensteuerung 80 eine Einstellvorrichtung 100 an. Wie aus der Zeichnung zu ersehen ist, liegt die Einstellvorrichtung oberhalb des Hohlträgers 50 und ist mit einer Handkurbel 100a versehen. Bei einem Drehen der Handkurbel 100a wird der Steuerarm um die Achse der Gelenkverbindung 90 verstellt. Der Steuerarm 88 hat ein im Einsatz vor den Bodenbearbeitungswerkzeugen liegendes vorderes und unteres Ende 104, an dem ein Träger 110 lösbar befestigt ist. Der Träger kann ein oder mehrere Tiefeneinstellräder 112 aufnehmen, die im Einsatz auf der Bodenoberfläche laufen. Bei einem Drehen an der Kurbel 100a werden dann die Bodenbearbeitungswerkzeuge 60 bis 64 mehr oder weniger tief in den Boden eindringen.

Die auf die Bodenbearbeitungswerkzeuge im Einsatz einen bodenwärts gerichteten Druck ausübende Federspannvorrichtung 82 hat einen Stellmechanismus 210, der in mit Einkerbungen versehenen Abschnitten 212 und 214 oder in Abschnitten 212, 214 mit Rasterstellen an den rückwärtigen Stirnseiten 32a und 34a der Platten 32 und 34 gehalten ist und im Bereich der Abschnitte, beispielsweise durch Drehen, verstellt werden kann. Zu der Federspannvorrichtung gehören ferner noch zwei Spiralfedern 222 und 224, die zwischen dem Stellmechanismus 210 und den unteren Enden der Flanschteile 18 gespannt sind. Die Flanschteile haben hierzu an ihren unteren Enden entsprechende Schraubbolzen 226. Die Spiralfedern 222 und 224 sind derart angeordnet, daß sie den Hohlträger 50 bodenwärts drücken wollen. Verstellt sich der Hohlträger 50 mit Bezug auf den Werkzeugträger 12 nach oben, so erfolgt dies gegen die eingestellte Federkraft. Die Federkraft wird dadurch eingestellt, daß der Stellmechanismus 210 verstellt wird. Wird zum Beispiel der Stellmechanismus 210 auf den Stirnseiten 32a und 34a nach oben gedreht, so vergrößert sich der Abstand zwischen dem Stellmechanismus und den Schraubbolzen 226. Die Federspannung und damit auch die Federkraft steigt bei einer vorgegebenen Tiefeneinstellung an. Wird der Stellmechanismus in den Abschnitten 212 und 214 an den Stirnseiten 32a und 34a nach unten gedreht, so verringert sich der Abstand und die Federkraft wird verringert.

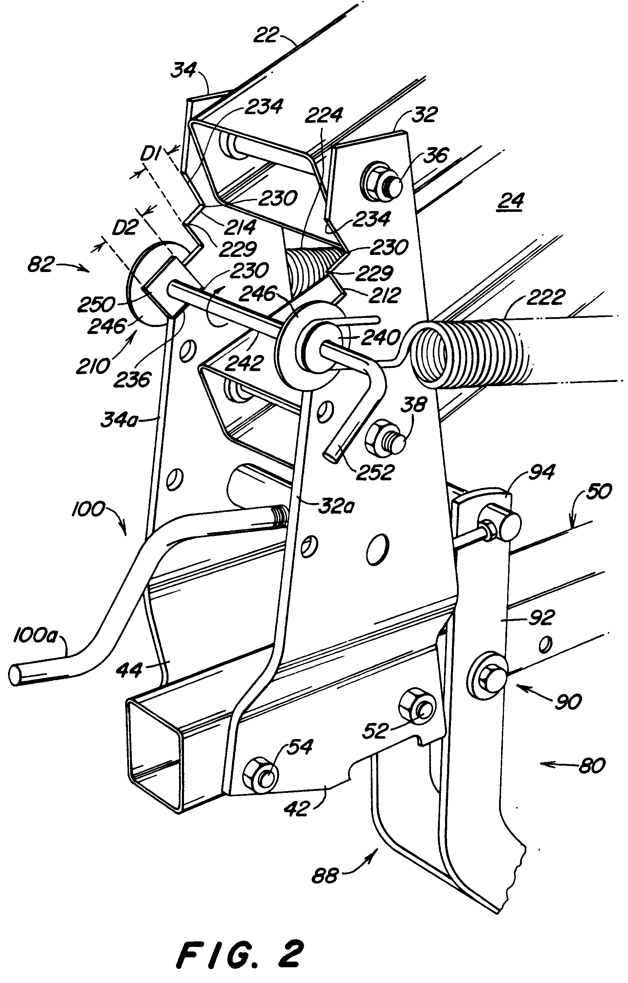

Die Abschnitte 212 und 214 an den rückwärtigen Stirnseiten 32a und 34a der Platten 32 und 34 sind sägezahnähnlich mit spitzen geradkantigen Zähnen 229 und dazwischen liegenden V-förmigen Einkerbungen oder Zahnlücken 230 ausgebildet, die Rasterstellen bilden, wie es aus Fig. 2 ersichtlich ist. Die Stirnseiten 32a und 34a verlaufen mit Bezug auf Fig. 1 derart schräg nach oben und vorne, daß die untere Spitze der Zahnlücken 230 immer zu den Schraubbolzen 226 bzw. zu der Längsmittellinie der entsprechenden Feder 222 bzw. 224 ausgerichtet ist. Mit Ausnahme der obersten und der untersten Zahnlückenseite haben alle anderen Zahnlückenseiten eine identische Länge von D1. Die oberste und die unterste Seite ist etwas länger, damit der Stellmechanismus nicht ohne weiteres über die oberste Einkerbung oder die unterste Einkerbung hinaus gedreht werden kann. Aus der Zeichnung ist ferner ersichtlich, daß die Zähne 229 zwischen den Gelenkverbindungen 36 und 38 liegen.

Der Stellmechanismus 210 selbst hat zwei Drehzapfen 240, die auf einer sich quer erstreckenden Stange 242 derart angeordnet sind, daß sie gegen die Außenseiten der Platten 32 und 34 im Bereich der Abschnitte 212, 214 anliegen bzw. sich in diesem Bereich befinden. Die Enden der Spiralfedern 222 und 224 sind als Haken ausgebildet und umfassen die Drehzapfen 240, die mit der Stange 242 drehfest verbunden sind und sich damit beim Drehen der Stange 242 mitdrehen. Bei dem bevorzugten Ausführungsbeispiel können noch zwischen den Drehzapfen 240 und den Außenseiten der Platten 32, 34 Führungsscheiben 246 vorgesehen sein, um einen mehr oder weniger spielfreien Einsatz zu ermöglichen. Auf der Stange 242 sind mit einem Abstand, der dem Plattenabstand entspricht, zwei Eingreifteile 250 mit einer Stärke vorgesehen, die der Plattenstärke entspricht. Die Eingreifteile 250 befinden sich damit innen von den Führungsscheiben 246 und greifen in die Zahnlücken 230 ein. Jeder Eingreifteil 250 ist quadratisch und jede Spitze einer einzelnen Einkerbung bzw. Zahnlücke ist rechtwinklig gestaltet. Damit paßt jede Ecke der Eingreifteile in jede Spitze der Zahnlücken 230. Die Federspannung hält die Eingreifteile in den jeweiligen Zahnlücken 230. Die Seitenlänge eines jeden Eingreifteils beträgt D2, wobei D2 größer ist als D1 (vorzugsweise kann D1 50 - 60% von D2 betragen), damit der Stellmechanismus 210 leicht aus einem Paar Einkerbungen in ein anderes Paar Einkerbungen gerollt oder gedreht werden kann. Die oberste und die unterste Seite der obersten und der untersten Zahnlücke hat eine Länge, die D2 entspricht oder noch etwas größer ist, damit ein Hinausdrehen aus den Abschnitten 212 und 214 verhindert wird. Die Stange 242 ist zumindest an einer Seite noch rechtwinklig abgewinkelt, so daß ein Handgriff 252 entsteht. Da jeder Eingreifteil 250 aus der zugehörigen Zahnlücke 230 vorsteht, läßt sich der Stellmechanismus beim Erfassen des Handgriffes 252 leicht von einer Stellung in eine andere durch die Einkerbungen vorgegebene Stellung drehen, so daß die Federspannung ohne Zuhilfenahme von Werkzeugen leicht einstellbar ist.

Am einfachsten läßt sich die Federspannung natürlich einstellen, wenn der Werkzeugträger 12 in seine Transportstellung ausgehoben wurde. In einem solchen Fall befinden sich die Lenker 22 und 24 in ihrer untersten in Fig. 2 gezeigten Stellung, in der sie schräg nach unten gerichtet sind und gegen einen Anschlag anliegen. Die Federn 222, 224 sind in dieser Stellung fast entspannt und haben lediglich eine Federspannung, die den Stellmechanismus 210 in einem Paar von Einkerbungen hält. In einer solchen Stellung der Federn läßt sich der Stellmechanismus 210 leicht verstellen. Unter Umständen ist dann ein Drehen nicht erforderlich. Der Stellmechanismus wird einfach nach rückwärts gezogen und in einer neuen Stellung eingesetzt. Für derartige Einsätze brauchen die Eingreifteile natürlich keine quadratische Ausgestaltung.

Bei dem bevorzugten Ausführungsbeispiel sind infolge der drei Sätze von untereinanderliegenden Einkerbungen drei unterschiedliche Federstellungen möglich und bei einer Verstellung des Stellmechanismus von einer Stellung in die nächstliegende wird eine Federkraftänderung zwischen 15% bis 30% erzeugt. Selbstverständlich kann die Anzahl von Sätzen von Einkerbungen geändert werden, aber auch die Anzahl der Federn. In der Regel erfolgt eine Federkrafteinstellung durch manuelles Drehen des Stellmechanismus vermittels des Handgriffes 252. Eine vorher eingestellte Stellung ist leicht wieder auffindbar, wenn sich die Bedienungsperson die vorherige Stellung des Stellmechanismus einprägt. Über den Stellmechanismus kann auf alle an einer Reiheneinheit vorgesehenen Werkzeuge derselbe Bodendruck wirken. Bei dem bevorzugten Ausführungsbeispiel befindet sich der Stellmechanismus rückwärtig an den Platten 32, 34 und die Federn liegen an den Außenseiten der Platten. Hierdurch ergibt sich ein relativ großer Freiraum vor und zwischen den Platten für die Lenker 22 und 24, aber auch für andere Einrichtungen, wie z. B. die Einstellvorrichtung 100 für die Tiefensteuerung. Dadurch, daß die Handkurbel 100a der Tiefensteuerung in unmittelbarer Nähe des Handgriffs 252 liegt, lassen sich beide Einstellungen von derselben leicht zugänglichen Stelle aus vornehmen.

Die Federn können natürlich auch zwischen den beiden Platten vorgesehen werden, wenn anstelle des unteren Lenkers 24 zwei zueinander Querabstand aufweisende Lenker eingesetzt werden. In Ausnahmefällen kann auch eine einzige Feder genügen.

## Patentansprüche

1. Landwirtschaftliches Gerät mit einem Rahmenteil (12), einem an den Rahmenteil (12) vertikal verstellbar angeschlossenen Werkzeugträger und mit einer Vorrichtung zum Einstellen des Bodendrucks des oder der an dem Werkzeugträger vorgesehenen Werkzeuge (60, 62, 64) über mindestens eine Feder (222, 224), dadurch gekennzeichnet, daß der Werkzeugträger einen Abschnitt (212, 214) mit untereinanderliegenden Rasterstellen aufweist und daß die Feder (222, 224) an einem ihrer Enden mit einem Eingreifteil (250) versehen ist, der wahlweise in eine der Rasterstellen einsetzbar ist.

2. Gerät nach Anspruch 1, dadurch gekennzeichnet, daß der Eingreifteil (250) Bestandteil eines Stellmechanismus (210) ist, der auf dem Abschnitt (212, 214) mit den Rasterstellen abrollbar ist.

3. Gerät nach Anspruch 1 oder 2, dadurch gekennzeichnet, daß der Werkzeugträger aus einem sich in Arbeitsrichtung erstreckenden Träger (50) besteht, der wenigstens eine vertikal gerichtete Platte (32, 34) aufweist, die an ihrer rückwärtigen Stirnkante (32a, 34a) mit den Rasterstellen versehen ist und in ihrem frontseitigen Bereich über zwei vertikal verschwenkbare und zueinander parallel verlaufende Lenker (22, 24) an dem Rahmenteil (12) angelenkt ist, an dem auch die Feder (222, 224) mit ihrem dem Eingreifteil (250) abgelegenen Ende angreift.

4. Gerät nach einem oder mehreren der vorherigen Ansprüche, dadurch gekennzeichnet, daß die Abschnitte (212, 214) mit den Rasterstellen Zähne (229) mit rechtwinkligen Zahnflanken aufweisen.

5. Gerät nach einem oder mehreren der vorherigen Ansprüche, dadurch gekennzeichnet, daß der Eingreifteil (250) quadratisch ausgebildet ist.

6. Gerät nach einem oder mehreren der vorherigen Ansprüche, dadurch gekennzeichnet, daß die Seiten der Rasterstellen rechtwinklig zueinander oder treppenförmig angeordnet sind, wobei die oberste und die unterste Seite zumindest der Länge einer Seite des Eingreifteils (250) entspricht und die übrigen Seiten kürzer sind.

7. Gerät nach einem oder mehreren der vorherigen Ansprüche, dadurch gekennzeichnet, daß zwei zueinander einen Querabstand aufweisende Abschnitte (212, 214) vorgesehen sind, und daß der Stellmechanismus (210) sich zwischen diesen Abschnitten (212, 214) erstreckt und das Ende der Feder (222, 224) drehbar aufnimmt.

8. Gerät nach einem oder mehreren der vorherigen Ansprüche, dadurch gekennzeichnet, daß der Werkzeugträger mit zwei zueinander einen Querabstand aufweisenden Platten (32, 34) versehen ist, wobei an den rückwärtigen vertikal gerichteten Stirnseiten (32a, 34a) dieser Platten die Abschnitte (212, 214) mit den Rasterstellen vorgesehen sind, die rückwärtigen Enden der Lenker (22, 24) in dem vorderen Bereich der Platten und zwischen den Platten gelagert sind und wobei je eine Feder (222, 224) außen neben den Platten an dem Stellmechanismus (210) angreift.

9. Gerät nach Anspruch 8, dadurch gekennzeichnet, daß die Lenker (22, 24) übereinander angeordnet sind, und daß sich die Abschnitte (212, 214) mit den Rasterstellen zwischen den Lenkern befinden.

10. Gerät nach Anspruch 8, dadurch gekennzeichnet, daß der Stellmechanismus (210) aus einer an mindestens einem Ende abgewinkelten Stange (242) besteht, auf der die Eingreifteile (250) in einem Abstand angeordnet sind, der dem Plattenabstand entspricht, wobei außen neben den Platten auf der Stange (242) je eine Führungsscheibe (246) vorgesehen ist.
